# EUROPEAN PATENT SPECIFICATION

(11) **EP 3 068 115 B1**
(45) Date of publication and mention of the grant of the patent: **08.05.2019**
(21) Application number: 16159495.7
(22) Date of filing: 09.03.2016
(51) Int. Cl.: H04M 1/57, H04L 29/06, H04M 3/42, H04M 19/04, H04W 4/80

(54) **INCOMING CALL IDENTIFICATION**
IDENTIFIZIERUNG EINES EINGEHENDEN ANRUFES
IDENTIFICATION D'UN APPEL ENTRANT

(30) Priority: 13.03.2015 CN 201510111980
(43) Date of publication of application: 14.09.2016
(73) Proprietor: Xiaomi Inc., Beijing 100085 (CN)
(72) Inventor: WEN, Zhenwei, 100085 Beijing (CN); XU, Ruijun, 100085 Beijing (CN); ZHANG, Bo, 100085 Beijing (CN)
(74) Representative: Sackin, Robert

(56) References cited:
- US-A1- 2007 142 078
- US-A1- 2013 053 009
- US-A1- 2013 203 390

## Description

### TECHNICAL FIELD

The present disclosure generally relates to the communication technical field, and more particularly, to a method and a device for incoming call identification.

### BACKGROUND

At present, malicious calls have become a public nuisance. In order to prevent such malicious calls from harassing users, many security products have emerged. For example, there is much software against malicious calls, and when a user receives a harassing incoming call, the software may mark identification tags such as "sales", "defraud" or the like on the incoming call, and the marked identification tags are uploaded to a cloud end server. When other users receive the same harassing incoming call, the marked identification tags may be presented to other users so as to remind the users, thereby filtering of harassing incoming calls is realized.

However, filtering harassing incoming calls by identification tags cannot be applied in all calling scenarios in practice, and thus how to make the filtering of harassing incoming calls by identification tags more widely adaptable to calling scenarios becomes one of the hotspots in this field at present

US patent application with publication No. US2013/0203390 discloses an information-processing apparatus that includes a communication unit that receives a telephone call from a telephone number of a calling party. The communication unit transmits a transmission of the telephone number to a search engine when the communication unit receives the telephone call. Further, the communication unit receives a result from the search engine after the transmission of the telephone number.

US patent application with publication No. US2013/0053009 discloses a method that enables a mobile device to provide caller information stored on the mobile device to an accessory device that is connected wirelessly to the mobile device. The method includes establishing a short-range wireless connection between the mobile device and the accessory device, determining an incoming telephone number for an incoming telephone call, searching a directory stored on the mobile device for an entry matching the incoming telephone number, and transmitting caller data from the entry matching the incoming telephone number to the accessory device.
US patent application with publication number US 2007/142078 discloses techniques to generate context information using a context information management module. The context information management module may search for context information associated with a contact identifier using a context information database.

### SUMMARY

In order to overcome existing problems in related arts, the present disclosure provides a method and a device for incoming call identification.

Aspects of the invention are defined by the independent claims below to which reference should now be made. Optional features are defined by the dependent claims.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
Fig. 1 is a flowchart showing a method for incoming call reminder according to an exemplary embodiment.
Fig. 2 is a flowchart showing another method for incoming call reminder according to an exemplary embodiment.
Fig. 3 is a block diagram showing a device for incoming call reminder according to an exemplary embodiment.
Fig. 4 is a block diagram showing another device for incoming call reminder according to an exemplary embodiment.
Fig. 5 is a block diagram showing another device for incoming call reminder according to an exemplary embodiment.
Fig. 6 is a block diagram showing another device for incoming call reminder according to an exemplary embodiment.
Fig. 7 is a block diagram showing another device for incoming call reminder according to an exemplary embodiment.
Fig. 8 is a block diagram showing a structure for the device for incoming call reminder according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of apparatuses and methods consistent with aspects related to the present disclosure as recited in the appended claims.

The terminologies used herein are only for describing particular embodiments but not for limiting the present disclosure. The singular form words "a", "the", and "said" used in the present disclosure and append claims are intended to include plural form, unless otherwise clearly stated. Also, it shall be appreciated that the terminology "and/or" used herein refers to any or all combinations of one or more listed related items.

It shall be appreciated that although the present disclosure uses terminologies "first", "second", and "third" and the like to describe various information, the information shall not be limited by these terminologies. Using these terminologies is only for distinguishing information of the same type. For example, without departing from the scope of the present disclosure, the first information may be referred to as the second information, and similarly, the second information may be referred to as the first information. Depending on the context, the terminology "if' used herein may be interpreted as "when" or "in response to determining that".

In many calling scenarios where it is inconvenient for a user to view the screen of a mobile phone, for example, when a user is driving a car with Bluetooth headphones or earphone worn, if an incoming call is marked as a harassing incoming call at a cloud end, because the user cannot view the screen of the mobile phone, the user cannot see tag information of this incoming call, and thus the user may still answer this incoming call which is marked as a harassing call as usual, and thereby disturbance to the user still exists.

In view of the above, the present disclosure proposes a method for incoming call reminder or identification. In this method, the voice play technology is integrated with the incoming call identification technology. When an incoming call is received, voice identification information of the incoming call is determined according to number information of the incoming call, and the voice identification information of the incoming call is audibly played for a user. Thus, when the voice identification information carries the identification tag information corresponding to the number information of the incoming call, a user may obtain the identification tag of the incoming call even in a calling scenario where it is inconvenient for a user to view the screen of a mobile phone.

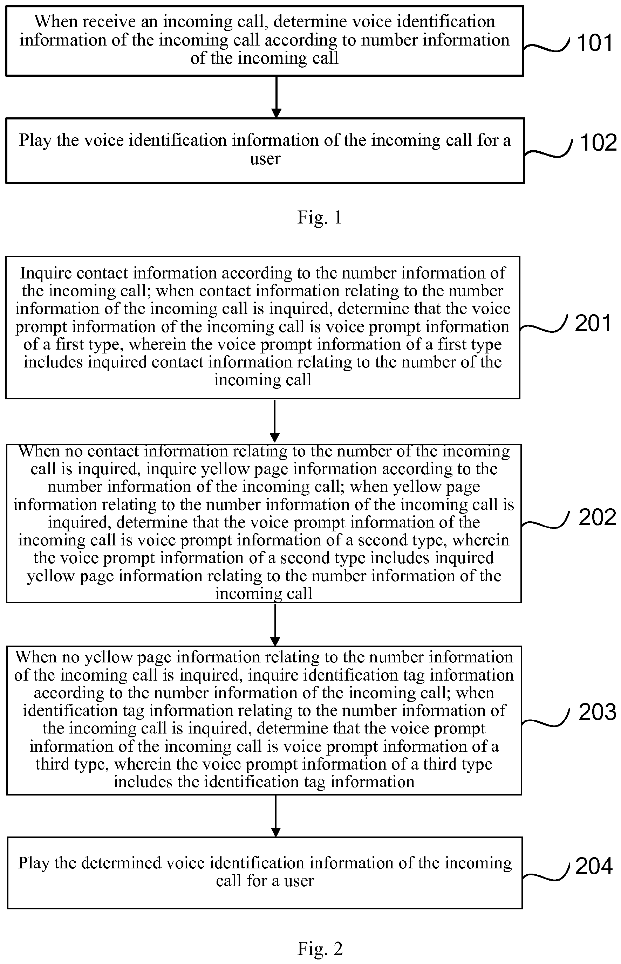

Fig. 1 is a flowchart showing a method for incoming call reminder according to an exemplary embodiment. As shown in Fig. 1, the method is applied in a terminal and includes the following steps.

In step 101, when an incoming call is received, voice identification information of the incoming call is determined according to number information of the incoming call.

In step 102, the voice identification information of the incoming call is played for a user audibly.

In the present embodiment, the terminal may be a smart phone. The terminal may be implemented as other types of smart terminals having a calling function. The technical solutions of the present disclosure are described below in detail using an example where the terminal is a smart phone. Under an initial state, when the smart phone receives an incoming call, the phone call service on the smart phone promptly extracts the number of the incoming call, and locally performs user identification with respect to the extracted number of the incoming call, and determines the voice identification information of the incoming call according to the user identification result.

When the phone call service on the smart phone performs user identification with respect to the number of the incoming call, the number of the incoming call may be inquired respectively in the local address book, yellow page database (or telephone directory database) and identification tag database at a server end. When the number of the incoming call is inquired in the local address book, matching between the number of the incoming call and the local address book may be performed; if the number of the incoming call matches a contact in the local address book, the incoming call is deemed as a normal incoming call, and at this time, the basic information of the contact may be directly read out from the address book and may be presented on the calling interface for the user. Rather, if the smart phone starts a cloud end address book function and the local address book has been uploaded into the server end in advance, the above procedure for matching the number of the incoming call with the local address book may be performed at the cloud end server via a network or networks.

If the number of the incoming call does not match any contact in the local address book, the incoming call is deemed as a strange incoming call. For a strange incoming call, if the smart phone locally embeds in a yellow page database or telephone directory database, or business telephone directory database, the smart phone may further inquire contact information in the local yellow page database or telephone directory database for the number of the incoming call so as to determine whether the strange incoming call has a number included in the yellow page database or telephone directory database. For example, the yellow page database usually includes commonly used public service numbers (such as service numbers of mobile operators, banks, large enterprises and organizations), the numbers of merchants which have passed real-name authentication, and the like. If the strange incoming call has a number included in the yellow page database, corresponding contact information may be directly read out from the yellow page database and may be presented on the calling interface for the user. Rather, if the smart phone does not locally embed in the yellow page database, the above procedure for inquiring contact information in the local yellow page database with respect to the number of the incoming call may be performed, via a network or networks, at a server end which has embed in the yellow page database. In the embodiment, when the phone call service on the smart phone inquiries the extracted number of the incoming call in the local address book and the yellow page database and no contact information relating to the number of the incoming call is inquired, whether the number of the incoming call carries an identification tag may be further determined.

When determining whether the number of the incoming call carries the identification tag, an inquiry request carrying the number of the incoming call may be sent to a server end, and after receiving the inquiry request, the server end inquires in a local identification tag database whether the number has been marked by other users. If the number has been marked by other users, the server end may return the mark to the smart phone as an inquiry result. It shall be noted that the server end may be implemented as a security center providing security service for a user, and the security center may be a server, a server cluster or a cloud platform.

When the smart phone receives the inquiry result returned by the server end, the smart phone may parse the inquiry result. If the inquiry result carries an identification tag, at this time, the phone call service of the smart phone may determine that the number of the incoming call has been marked by other users, and the number of the incoming call carries the identification tag. In practice, the identification tag database may be locally embedded in the terminal. For example, in practice, the terminal may synchronize the identification tag database of the server end locally, and thus when no contact information relating to the number of the incoming call is inquired from the local address book and the yellow page database, the terminal may further inquire from the identification tag database synchronized locally to determine whether the number of the incoming call carries an identification tag.

In the embodiment, when inquiries are respectively performed in the local address book, yellow page database and identification tag database for the extracted number of the incoming call and the number of the incoming call is successfully identified, the voice identification information of the incoming call may be determined according to the identification result, and the determined voice identification information may be played for the user. The voice identification information of the incoming call may be classified into different types in advance according to the type of the identified number of the incoming call.

In practice, if the number of the incoming call matches a contact in a local address book, it can be determined that the voice prompt information of the incoming call is voice identification information of a first type. The voice identification information of the first type may include contact information matching the local address book. For example, after locally performing inquiries in the local address book for the extracted number of the incoming call, if the number of the incoming call matches a contact in the local address book, the information of the contact may be directly read out from the local address book, and then a voice play message "xxx is calling you" may be audibly played for the user.

If the number of the incoming call is a number in the yellow page database, it can be determined that the voice identification information of the incoming call is voice identification information of a second type. The voice prompt information of a second type may include the inquired yellow page information relating to the number information of the incoming call. For example, if the number of the incoming call is a number of a contact in the local yellow page database, the information of the contact may be directly read out from the yellow page database, and then a voice play message "xxx company is calling you" may be audibly played for the user.

If the number of the incoming call does not match any contact information in the local address book and the yellow page database, and it is inquired that the number of the incoming call carries an identification tag after performing inquiries in the identification tag database, it can be determined that the voice identification information of the incoming call is voice identification information of a third type. The voice prompt information of a third type includes the identification tag information. For example, if the number of the incoming call is 13100000000, and the identification tag of the number of the incoming call is "sales", a voice play message "a call is coming, it may be a sales call and the phone number is 13100000000" may be audibly played for the user.

If no contact information is inquired after performing inquiries in the local address book, the yellow page database and the identification tag database for the number of the incoming call, it can be determined that the voice identification information of the incoming call is voice identification information of a fourth type. The voice prompt information of a fourth type may only include the number information of the incoming call. For example, if the number of the incoming call is 13100000000, and if no contact information is inquired after performing inquiries in the local address book, the yellow page database and the identification tag database, a voice play message "13100000000 is calling you" may be audibly played for the user.

In the embodiment, when playing the voice identification information for the user, the voice identification information may be firstly converted into a voice message, and the converted voice message may be output to the user via a local audio output device (for example, a speaker or a telephone receiver in a smart phone), or the converted voice message may be transmitted to an audio output peripheral (for example a Bluetooth earphone) via a pre-established audio path so as to output the voice message to the user. Thus, in a calling scenario where it is inconvenient for the user to view the screen of the mobile phone, if the voice identification information includes the identification tag of the number of the incoming call, the identification tag of the incoming call may still be obtained.

It shall be noted that if the audio output peripheral is a Bluetooth earphone, when transmitting media audio (STREAM_MEDIA) of the voice play information to the Bluetooth earphone, an audio path needs to be established between the Bluetooth earphone and the smart phone. The audio path between the Bluetooth earphone and the smart phone may include an Advanced Audio Distribution Profile (A2DP) path and a Synchronous Connection Oriented link (SCO) path.

The A2DP path is usually applied in media audio transmission between Bluetooth devices and has good audio effects. The transmission of the media audio of the voice play information via the A2DP path may be implemented by amending the audio routing of the Bluetooth in the native system of a smart phone into an A2DP path. However, since the native system of the smart phone needs to be amended, the implementation cost is relatively high. The SCO path is usually applied in call audio transmission between Bluetooth devices. The transmission of the media audio of the voice play information via the SCO path may be implemented by amending the media audio into call audio (STREAM_CALL). The transmission of media audio of the voice play information via the SCO path is relatively simple but has worse audio effects than the A2DP path.

In the above embodiments, the voice play technology is integrated with the incoming call identification technology. When an incoming call is received, voice identification information of the incoming call is determined according to number information of the incoming call, and the voice identification information of the incoming call is played for a user. Thus, when the voice identification information carries the identification tag information corresponding to the number information of the incoming call, a user may obtain the identification tag of the incoming call even in a calling scenario where it is inconvenient for a user to view the screen of a mobile phone.

Fig. 2 is a flowchart showing a method for incoming call reminder according to an exemplary embodiment. As shown in Fig. 2, the method is applied in a terminal and includes the following steps.

In step 201, contact information is inquired according to the number information of the incoming call. When contact information relating to the number information of the incoming call is inquired, it is determined that the voice prompt information of the incoming call is voice prompt information of a first type. The voice prompt information of a first type includes inquired contact information relating to the number of the incoming call.

In step 202, when no contact information relating to the number of the incoming call is inquired, yellow page information is inquired according to the number information of the incoming call. When yellow page information relating to the number information of the incoming call is inquired, it is determined that the voice prompt information of the incoming call is voice prompt information of a second type. The voice prompt information of a second type includes inquired yellow page information relating to the number information of the incoming call.

In step 203, when no yellow page information relating to the number information of the incoming call is inquired, identification tag information is inquired according to the number information of the incoming call. When identification tag information relating to the number information of the incoming call is inquired, it is determined that the voice prompt information of the incoming call is voice prompt information of a third type. The voice prompt information of a third type includes the identification tag information.

In step 204, the determined voice identification information of the incoming call is audibly played for a user.

In the present embodiment, the terminal may be a smart phone. The terminal may be implemented as other types of smart terminals having a calling function. The technical solutions of the present disclosure are described below in detail using an example where the terminal is a smart phone.

Under an initial state, when the smart phone receives an incoming call, the phone call service on the smart phone promptly extracts the number of the incoming call, and locally performs user identification with respect to the extracted number of the incoming call, and determines the voice identification information of the incoming call according to the user identification result.

When the phone call service on the smart phone performs user identification with respect to the number of the incoming call, the number of the incoming call may be respectively inquired in the local address book, yellow page database and identification tag database at a server end. When the number of the incoming call is inquired in the local address book, matching between the number of the incoming call and the local address book may be performed; if the number of the incoming call matches a contact in the local address book, the incoming call is deemed as a normal incoming call, and at this time, the basic information of the contact may be directly read out from the address book and may be presented on the calling interface for the user. If the smart phone has a cloud end address book function and the local address book has been uploaded into the server end in advance, the above procedure for matching the number of the incoming call with the local address book may be performed at the cloud end server via a network or networks.

If the number of the incoming call does not match any contact in the local address book, the incoming call is deemed as a strange incoming call. For a strange incoming call, if the smart phone locally embeds in a yellow page database, the smart phone may further inquire contact information in the local yellow page database for the number of the incoming call so as to determine whether the strange incoming call has a number included in the yellow page database. For example, the yellow page database usually includes commonly used public service numbers (such as service numbers of mobile operators, banks, large enterprises and organizations), the numbers of merchants which have passed real-name authentication, and the like. If the strange incoming call has a number included in the yellow page database, corresponding contact information may be directly read out from the yellow page database and may be presented on the calling interface for the user. If the smart phone does not locally embed in the yellow page database, the above procedure for inquiring contact information in the local yellow page database with respect to the number of the incoming call may be performed, via a network or networks, at a server end which has embedded the yellow page database. In the embodiment, when the phone call service on the smart phone inquires the extracted number of the incoming call in the local address book and the yellow page database and no contact information relating to the number of the incoming call is inquired, whether the number of the incoming call carries an identification tag may be further determined.

When determining whether the number of the incoming call carries the identification tag, an inquiry request carrying the number of the incoming call may be sent to a server end. After receiving the inquiry request, the server end inquires in a local identification tag database whether the number has been marked by other users. If the number has been marked by other users, the server end may return the mark to the smart phone as an inquiry result. It shall be noted that the server end may be implemented as a security center providing security service for a user, and the security center may be a server, a server cluster or a cloud platform.

When the smart phone receives the inquiry result returned by the server end, the smart phone may parse the inquiry result. If the inquiry result carries an identification tag, at this time, the phone call service of the smart phone may determine that the number of the incoming call has been marked by other users, and the number of the incoming call carries the identification tag. In practice, the identification tag database may be locally embedded in the terminal. For example, in practice, the terminal may synchronize the identification tag database of the server end locally, and thus when no contact information relating to the number of the incoming call is inquired from the local address book and the yellow page database, the terminal may further inquire from the identification tag database synchronized locally to determine whether the number of the incoming call carries an identification tag.

In the embodiment, when inquiries are respectively performed in the local address book, yellow page database and identification tag database for the extracted number of the incoming call and the number of the incoming call is successfully identified, the voice identification information of the incoming call may be determined according to the identification result, and the determined voice identification information may be played for the user. The voice identification information of the incoming call may be classified into different types in advance according to the type of the identified number of the incoming call.

In practice, if the number of the incoming call matches a contact in a local address book, it can be determined that the voice prompt information of the incoming call is voice identification information of a first type. The voice identification information of the first type may include contact information matching the local address book. For example, after locally performing inquiries in the local address book for the extracted number of the incoming call, if the number of the incoming call matches a contact in the local address book, the information of the contact may be directly read out from the local address book, and then a voice play message "xxx is calling you" may be played audibly for the user.

If the number of the incoming call is a number in the yellow page database, it can be determined that the voice identification information of the incoming call is voice identification information of a second type. The voice prompt information of a second type may include the inquired yellow page information relating to the number information of the incoming call. For example, if the number of the incoming call is a number of a contact in the local yellow page database, the information of the contact may be directly read out from the yellow page database, and then a voice play message "xxx company is calling you" may be played audibly for the user.

If the number of the incoming call does not match any contact information in the local address book and the yellow page database, and it is inquired that the number of the incoming call carries an identification tag after performing inquiries in the identification tag database, it can be determined that the voice identification information of the incoming call is voice identification information of a third type. The voice prompt information of a third type includes the identification tag information. For example, if the number of the incoming call is 13100000000, and the identification tag of the number of the incoming call is "sales", a voice play message "a call is coming, it may be a sales call and the phone number is 13100000000" may be played audibly for the user.

If no contact information is inquired after performing inquiries respectively in the local address book, the yellow page database and the identification tag database for the number of the incoming call, it can be determined that the voice identification information of the incoming call is voice identification information of a fourth type. The voice prompt information of a fourth type may only include the number information of the incoming call. For example, if the number of the incoming call is 13100000000, and if no contact information is inquired after performing inquiries in the local address book, the yellow page database and the identification tag database, a voice play message "13100000000 is calling you" may be audibly played for the user.

In the embodiment, when playing the voice identification information for the user, the voice identification information may be firstly converted into a voice message, and the converted voice message may be output to the user via a local audio output device (for example, a speaker or a telephone receiver in a smart phone), or the converted voice message may be transmitted to an audio output peripheral (for example a Bluetooth earphone) via a pre-established audio path so as to output the voice message to the user. Thus, in a calling scenario where it is inconvenient for the user to view the screen of the mobile phone, if the voice identification information includes the identification tag of the number of the incoming call, the identification tag of the incoming call may still be obtained.

It shall be noted that if the audio output peripheral is a Bluetooth earphone, when transmitting media audio (STREAM_MEDIA) of the voice play information to the Bluetooth earphone, an audio path needs to be established between the Bluetooth earphone and the smart phone. The audio path between the Bluetooth earphone and the smart phone may include an Advanced Audio Distribution Profile (A2DP) path and a Synchronous Connection Oriented link (SCO) path.

The A2DP path is usually applied in media audio transmission between Bluetooth devices and has good audio effects. The transmission of the media audio of the voice play information via the A2DP path may be implemented by amending the audio routing of the Bluetooth in the native system of a smart phone into an A2DP path. However, since the native system of the smart phone needs to be amended, the implementation cost is relatively high. The SCO path is usually applied in call audio transmission between Bluetooth devices. The transmission of the media audio of the voice play information via the SCO path may be implemented by amending the media audio into call audio (STREAM_CALL). The transmission of media audio of the voice play information via the SCO path is relatively simple but has worse audio effects than the A2DP path.

In the above embodiments, the voice play technology is integrated with the incoming call identification technology. When an incoming call is received, voice identification information of the incoming call is determined according to number information of the incoming call, and the voice identification information of the incoming call is played for a user. Thus, when the voice identification information carries the identification tag information corresponding to the number information of the incoming call, a user may obtain the identification tag of the incoming call even in a calling scenario where it is inconvenient for a user to view the screen of a mobile phone.

Corresponding to the above embodiments of the method for incoming call reminder, the present disclosure further provides embodiments of devices.

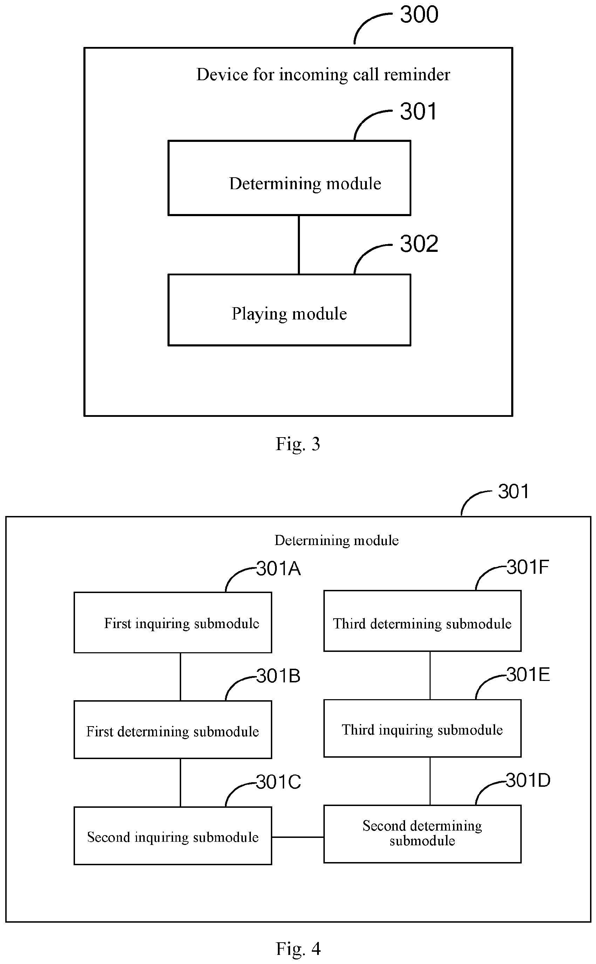

Fig. 3 is a block diagram showing a device for incoming call reminder or identification according to an exemplary embodiment.

As shown in Fig. 3, a device 300 for incoming call reminder or identification according to an exemplary embodiment includes a determining module 301 and a playing module 302.

The determining module 301 is configured to, when an incoming call is received, determine voice identification information of the incoming call according to number information of the incoming call.

The playing module 302 is configured to play the voice identification information of the incoming call for a user.

In the embodiment, the voice identification information of the incoming call may include contact information, yellow page information or identification tag information corresponding to the number information of the incoming call.

In the above embodiment, the voice play technology is integrated with the incoming call identification technology. When an incoming call is received, voice identification information of the incoming call is determined according to number information of the incoming call, and the voice identification information of the incoming call is played for a user. Thus, when the voice identification information carries the identification tag information corresponding to the number information of the incoming call, a user may obtain the identification tag of the incoming call even in a calling scenario where it is inconvenient for a user to view the screen of a mobile phone.

Fig. 4 is a block diagram showing another device according to an exemplary embodiment of the present disclosure. Based on the embodiment as shown in Fig. 3, the determining module 301 in the embodiment may include a first inquiring submodule 301A, a first determining submodule 301B, a second inquiring submodule 302C, a second determining submodule 301D, a third inquiring submodule 301E, and a third determining submodule 301F.

The first inquiring submodule 301A is configured to inquire contact information according to the number information of the incoming call.

The first determining submodule 301B is configured to, when contact information relating to the number information of the incoming call is inquired, determine that the voice prompt information of the incoming call is voice prompt information of a first type, wherein the voice prompt information of a first type includes inquired contact information relating to the number of the incoming call.

The second inquiring submodule 301C is configured to, when no contact information relating to the number of the incoming call is inquired, inquire yellow page information according to the number information of the incoming call.

The second determining submodule 301D is configured to, when yellow page information relating to the number information of the incoming call is inquired, determine that the voice prompt information of the incoming call is voice prompt information of a second type, wherein the voice prompt information of a second type includes inquired yellow page information relating to the number information of the incoming call.

The third inquiring submodule 301E is configured to, when no yellow page information relating to the number information of the incoming call is inquired, inquire identification tag information according to the number information of the incoming call.

The third determining submodule 301F is configured to, when identification tag information relating to the number information of the incoming call is inquired, determine that the voice prompt information of the incoming call is voice prompt information of a third type, wherein the voice prompt information of a third type includes the identification tag information.

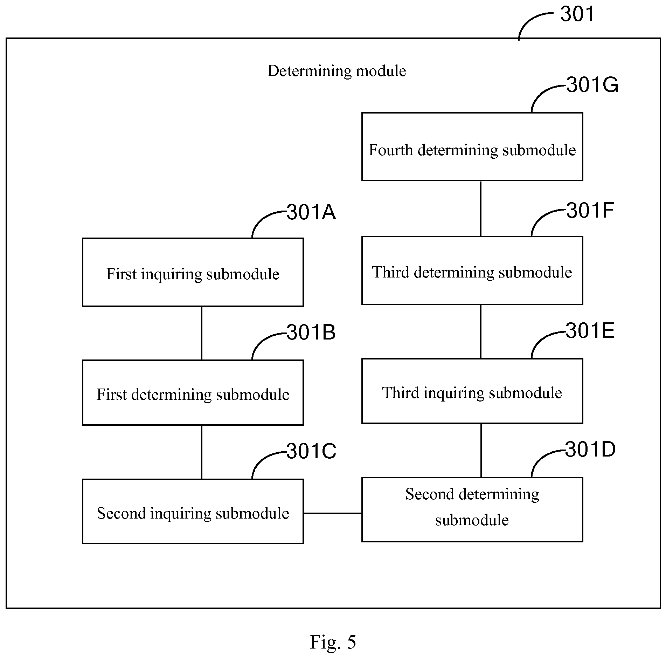

Fig. 5 is a block diagram showing another device according to an exemplary embodiment of the present disclosure. Based on the embodiment as shown in Fig. 4, the determining module 301 in the embodiment may further include a fourth determining submodule 301G.

The fourth determining submodule 301G is configured to, when no identification tag information relating to the number information of the incoming call is inquired, determine that the voice prompt information of the incoming call is voice prompt information of a fourth type, wherein the voice prompt information of a fourth type includes the number information of the incoming call.

It shall be noted that the structure of the fourth determining submodule 301G in the embodiment of the device as shown in Fig. 5 may also be included in the embodiment of the device as shown in Fig. 3, and the present disclosure does not impose specific limitations on this.

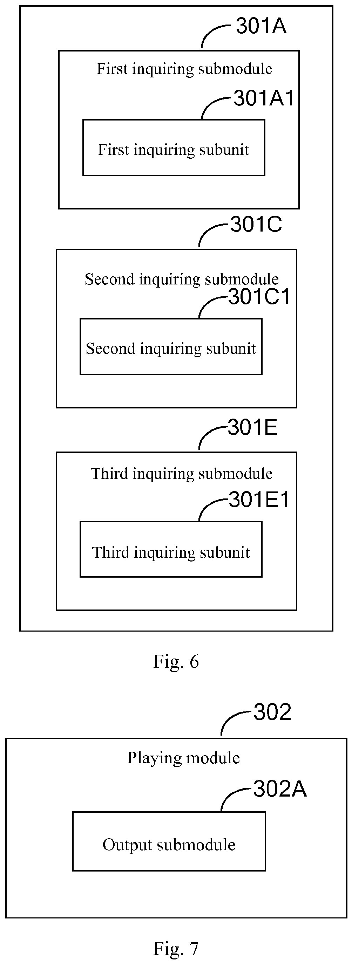

Fig. 6 is a block diagram showing another device according to an exemplary embodiment of the present disclosure. Based on the embodiment as shown in Fig. 5, the first inquiring submodule 301A in the embodiment may include a first inquiring subunit 301A1, the second inquiring submodule 301C may include a second inquiring subunit 301C1, and the third inquiring submodule 301E may include a third inquiring subunit 301E1.

The first inquiring subunit 301A1 is configured to locally inquire the contact information, or inquire the contact information at a server end via a network or networks.

The second inquiring subunit 301C1 is configured to locally inquire the yellow page information, or inquire the yellow page information at a server end via networks.

The third inquiring subunit 301E1 is configured to locally inquire the identification tag information, or inquire the identification tag information at a server end via networks.

It shall be noted that the structures of the first inquiring subunit 301A1, the second inquiring subunit 301C1 and the third inquiring subunit 301E1 in the embodiment of the device as shown in Fig. 6 may also be included in the embodiments of devices as shown in Figs. 3-5, and the present disclosure does not impose specific limitations on this.

Fig. 7 is a block diagram showing another device according to an exemplary embodiment of the present disclosure. Based on the embodiment as shown in Fig. 3, the playing module 302 includes an output submodule 302A.

The output submodule 302A is configured to convert the voice identification information of the incoming call into a voice message, and output the voice message to the user via a local audio output device, or transmit the voice message to an audio output peripheral via a pre-established audio path so as to output the voice message for the user.

In the embodiment, the audio output peripheral includes a Bluetooth earphone, and the pre-established audio path includes an A2DP path and a SCO path.

It shall be noted that the structure of the output submodule 302A in the embodiment of the device as shown in Fig. 7 may also be included in the embodiments of the devices as shown in Figs. 4-6, and the present disclosure does not impose specific limitations on this.

For realizing of functions of respective modules in the above devices, refer to the above description regarding corresponding steps in the methods, and detailed descriptions are omitted.

The embodiments of devices basically correspond to the embodiments of methods, and thus for related portions, the description about the embodiments of methods may be referred to. The above described embodiments of devices are only illustrative, and portions described as separated modules may be or may not be physically separated, and the portions shown as respective modules may be or may not be physical modules, i.e., the portions may be located at one place, or may be distributed over a plurality of network modules. Apart or whole of the modules may be selected to realize the objects of the technical solutions of the present disclosure according to actual requirements. One of ordinary skill in this art may understand and practice the technical solutions of the present disclosure without creative work.

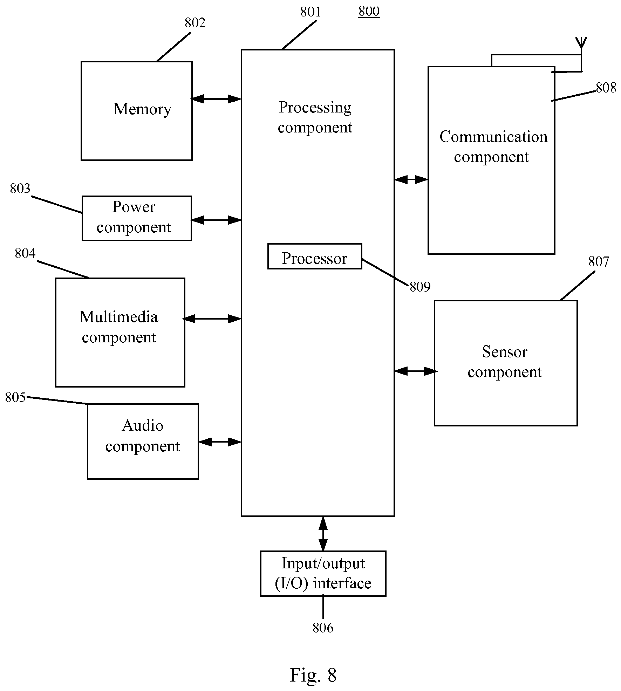

Fig. 8 is a block diagram showing a structure of a device for incoming call reminder according to an exemplary embodiment.

As shown in Fig. 8, it is a block diagram of a device 800 for incoming call reminder according to an exemplary embodiment. For example, the device 800 may be a mobile phone, a computer, a digital broadcast terminal, a messaging device, a gaming console, a tablet, a medical device, exercise equipment, a personal digital assistant, and the like.

Referring to Fig. 8, the device 800 may include one or more of the following components: a processing component 801, a memory 802, a power component 803, a multimedia component 804, an audio component 805, an input/output (I/O) interface 806, a sensor component 807, and a communication component 808.

The processing component 801 typically controls overall operations of the device 800, such as the operations associated with display, telephone calls, data communications, camera operations, and recording operations. The processing component 801 may include one or more processors 809 to execute instructions to perform all or part of the steps in the above described methods. Moreover, the processing component 801 may include one or more modules which facilitate the interaction between the processing component 801 and other components. For instance, the processing component 801 may include a multimedia module to facilitate the interaction between the multimedia component 804 and the processing component 801.

The memory 802 is configured to store various types of data to support the operation of the device 800. Examples of such data include instructions for any applications or methods operated on the device 800, contact data, phonebook data, messages, pictures, video, etc. The memory 802 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 803 provides power to various components of the device 800. The power component 803 may include a power management system, one or more power sources, and any other components associated with the generation, management, and distribution of power in the device 800.

The multimedia component 804 includes a screen providing an output interface between the device 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 804 includes a front camera and/or a rear camera. The front camera and the rear camera may receive an external multimedia datum while the device 800 is in an operation mode, such as a photographing mode or a video mode. Each of the front camera and the rear camera may be a fixed optical lens system or have focus and optical zoom capability.

The audio component 805 is configured to output and/or input audio signals. For example, the audio component 805 includes a microphone ("MIC") configured to receive an external audio signal when the device 800 is in an operation mode, such as a call mode, a recording mode, and a voice recognition mode. The received audio signal may be further stored in the memory 802 or transmitted via the communication component 808. In some embodiments, the audio component 805 further includes a speaker to output audio signals.

The I/O interface 802 provides an interface between the processing component 801 and peripheral interface modules, such as a keyboard, a click wheel, buttons, and the like. The buttons may include, but are not limited to, a home button, a volume button, a starting button, and a locking button.

The sensor component 807 includes one or more sensors to provide status assessments of various aspects of the device 800. For instance, the sensor component 807 may detect an open/closed status of the device 800, relative positioning of components, e.g., the display and the keypad, of the device 800, a change in position of the device 800 or a component of the device 800, a presence or absence of user contact with the device 800, an orientation or an acceleration/deceleration of the device 800, and a change in temperature of the device 800. The sensor component 807 may include a proximity sensor configured to detect the presence of nearby objects without any physical contact. The sensor component 807 may also include a light sensor, such as a CMOS or CCD image sensor, for use in imaging applications. In some embodiments, the sensor component 807 may also include an accelerometer sensor, a gyroscope sensor, a magnetic sensor, a pressure sensor, or a temperature sensor.

The communication component 808 is configured to facilitate communication, wired or wirelessly, between the device 800 and other devices. The device 800 can access a wireless network based on a communication standard, such as WiFi, 2G, or 3G, or a combination thereof. In one exemplary embodiment, the communication component 808 receives a broadcast signal or broadcast associated information from an external broadcast management system via a broadcast channel. In one exemplary embodiment, the communication component 808 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 802, executable by the processor 809 in the device 800, for performing the above-described methods. For example, the non-transitory computer-readable storage medium may be a ROM, a RAM, a CD-ROM, a magnetic tape, a floppy disc, an optical data storage device, and the like.

Where functional modules or sub-modules are referred to in apparatus embodiments for carrying out various steps of the described method(s) it will be understood that these modules or sub-modules may be implemented in hardware, in software, or a combination of the two. When implemented in hardware, the modules or sub-modules may be implemented as one or more hardware modules, such as one or more application specific integrated circuits. When implemented in software, the modules or sub-modules may be implemented as one or more computer programs that are executed on one or more processors.

It is intended that the specification and examples be considered as exemplary only, with a true scope of the invention being indicated by the following claims.

It is intended that the scope of the present disclosure only be limited by the appended claims.

## Claims

1. A method for incoming call identification , comprising the steps of:
when receiving an incoming call, a device determining (101) voice identification information of the incoming call according to number information of the incoming call; and
the device playing (102) the voice identification information of the incoming call for a user, wherein the determining (101) voice identification information of the incoming call according to number information of the incoming call, comprises:
inquiring contact information according to the number information of the incoming call in a local address book;
when contact information relating to the number information of the incoming call is inquired, determining (201) that voice prompt information of the incoming call is voice prompt information of a first type, wherein the voice prompt information of a first type comprises inquired contact information relating to the number of the incoming call;
when no contact information relating to the number of the incoming call is inquired, inquiring yellow page information according to the number information of the incoming call, wherein the yellow page information passed real-name authentication;
when yellow page information relating to the number information of the incoming call is inquired, determining (202) that voice prompt information of the incoming call is voice prompt information of a second type, wherein the voice prompt information of a second type comprises inquired yellow page information relating to the number information of the incoming call;
when no yellow page information relating to the number information of the incoming call is inquired, inquiring identification tag information according to the number information of the incoming call, wherein the identification tag information is marked by other users; and
when identification tag information relating to the number information of the incoming call is inquired, determining (203) that voice prompt information of the incoming call is voice prompt information of a third type, wherein the voice prompt information of a third type comprises the identification tag information.

2. The method according to claim 1, wherein the voice identification information of the incoming call comprises contact information, telephone directory information or identification tag information corresponding to the number information of the incoming call.

3. The method according to claim 2, further comprising the step of:
when no identification tag information relating to the number information of the incoming call is inquired, the device determining that voice prompt information of the incoming call is voice prompt information of a fourth type, wherein the voice prompt information of a fourth type comprises the number information of the incoming call.

4. The method according to claim 1, wherein the inquiring of the yellow page information or the identification tag information according to the number information of the incoming call comprises the step of:
locally inquiring the telephone directory information or the identification tag information; or, inquiring the telephone directory information or the identification tag information at a server end via a network.

5. The method according to claim 4, wherein the audio output peripheral comprises Bluetooth headphones or earphone, and the pre-established audio path comprises an Advanced Audio Distribution Profile path and a Synchronous Connection Oriented Link path.

6. A device for incoming call identification, comprising:
a determining module (301) configured to, when an incoming call is received, determine voice identification information of the incoming call according to number information of the incoming call; and
a playing module (302) configured to play the voice identification information of the incoming call for a user, wherein the determining module (301) comprises:
a first inquiring submodule (301A) configured to locally inquire contact information according to the number information of the incoming call;
a first determining submodule (301B) configured to, when contact information relating to the number information of the incoming call is inquired, determine that voice prompt information of the incoming call is voice prompt information of a first type, wherein the voice prompt information of a first type comprises inquired contact information relating to the number of the incoming call;
a second inquiring submodule (301C) configured to, when no contact information relating to the number of the incoming call is inquired, inquire yellow page information according to the number information of the incoming call, wherein the yellow page information passed real-name authentication;
a second determining submodule (301D) configured to, when yellow page information relating to the number information of the incoming call is inquired, determine that voice prompt information of the incoming call is voice prompt information of a second type, wherein the voice prompt information of a second type comprises inquired yellow page information relating to the number information of the incoming call;
a third inquiring submodule (301E) configured to, when no yellow page information relating to the number information of the incoming call is inquired, inquire identification tag information according to the number information of the incoming call, wherein the identification tag information is marked by other users; and
a third determining submodule (301F) configured to, when identification tag information relating to the number information of the incoming call is inquired, determine that voice prompt information of the incoming call is voice prompt information of a third type, wherein the voice prompt information of a third type comprises the identification tag information.

7. The device according to claim 6, wherein the voice identification information of the incoming call comprises contact information, telephone directory information or identification tag information corresponding to the number information of the incoming call.

8. The device according to claim 6, wherein the determining module (301) further comprises:
a fourth determining submodule (301G) configured to, when no identification tag information relating to the number information of the incoming call is inquired, determine that voice prompt information of the incoming call is voice prompt information of a fourth type, wherein the voice prompt information of a fourth type comprises the number information of the incoming call.

9. The device according to claim 6, wherein the first inquiring submodule (301A) comprises:
a first inquiring subunit (301A1) configured to locally inquire the contact information,;
wherein the second inquiring submodule (301C) comprises:
a second inquiring subunit (301C1) configured to locally inquire the yellow page information, or inquire the yellow page information at a server end via a network;
wherein the third inquiring submodule (301E) comprises:
a third inquiring subunit (301E1) configured to locally inquire the identification tag information, or inquire the identification tag information at a server end via a network.

10. A computer program, which when executing on a processor, performs a method according to any of claims 1 to 5.

## Patentansprüche

1. Verfahren zur Erkennung eingehender Anrufe, das die folgenden Schritte aufweist:
beim Empfangen eines eingehenden Anrufs Bestimmen (101) von Sprachidentifikationsinformationen des eingehenden Anrufs gemäß Nummerninformationen des eingehenden Anrufs; und
Wiedergeben (102) der Sprachidentifikationsinformationen des eingehenden Anrufs durch die Vorrichtung für einen Benutzer, wobei das Bestimmen (101) von Sprachidentifikationsinformationen des eingehenden Anrufs gemäß Nummerninformationen des eingehenden Anrufs Folgendes aufweist:
Abfragen von Kontaktinformationen gemäß den Nummerninformationen des eingehenden Anrufs in einem örtlichen Adressbuch;
Bestimmen (201), wenn Kontaktinformationen bezüglich der Nummerninformationen des eingehenden Anrufs abgefragt werden, dass Sprachaufforderungsinformationen des eingehenden Anrufs Sprachaufforderungsinformationen eines ersten Typs sind, wobei die Sprachaufforderungsinformationen eines ersten Typs abgefragte Kontaktinformationen bezüglich der Nummer des eingehenden Anrufs aufweisen;
Abfragen, wenn keine Kontaktinformationen bezüglich der Nummer des eingehenden Anrufs abgefragt werden, von Gelbe-Seiten-Informationen gemäß den Nummerninformationen des eingehenden Anrufs, wobei die Gelbe-Seiten-Informationen eine Echter-Name-Authentifizierung durchlaufen haben;
Bestimmen (202), wenn Gelbe-Seiten-Informationen bezüglich der Nummerninformationen des eingehenden Anrufs abgefragt werden, dass Sprachaufforderungsinformationen des eingehenden Anrufs Sprachaufforderungsinformationen eines zweiten Typs sind, wobei die Sprachaufforderungsinformationen eines zweiten Typs abgefragte Gelbe-Seiten-Informationen bezüglich der Nummerninformationen des eingehenden Anrufs aufweisen;
Abfragen, wenn keine Gelbe-Seiten-Informationen bezüglich der Nummerninformationen des eingehenden Anrufs abgefragt werden, von Kennzeicheninformationen gemäß den Nummerninformationen des eingehenden Anrufs, wobei die Kennzeicheninformationen von anderen Benutzern markiert wird; und
Bestimmen (203), wenn Kennzeicheninformationen bezüglich der Nummerninformationen des eingehenden Anrufs abgefragt werden, dass Sprachaufforderungsinformationen des eingehenden Anrufs Sprachaufforderungsinformationen eines dritten Typs sind, wobei die Sprachaufforderungsinformationen eines dritten Typs die Kennzeicheninformationen aufweisen.

2. Verfahren nach Anspruch 1, wobei die Sprachidentifikationsinformationen des eingehenden Anrufs Kontaktinformationen, Telefonverzeichnisinformationen oder Kennzeicheninformationen aufweisen, die den Nummerninformationen des eingehenden Anrufs entsprechen.

3. Verfahren nach Anspruch 2, das ferner den folgenden Schritt aufweist:
Bestimmen durch die Vorrichtung, wenn keine Kennzeicheninformationen in Bezug auf die Nummerninformationen des eingehenden Anrufs abgefragt werden, dass Sprachaufforderungsinformationen des eingehenden Anrufs Sprachaufforderungsinformationen eines vierten Typs sind, wobei die Sprachaufforderungsinformationen eines vierten Typs die Nummerninformationen des eingehenden Anrufs aufweisen.

4. Verfahren nach Anspruch 1, wobei das Abfragen der Gelbe-Seiten-Informationen oder der Kennzeicheninformationen gemäß den Nummerninformationen des eingehenden Anrufs den folgenden Schritt aufweist:
örtliches Abfragen der Telefonverzeichnisinformationen oder der Kennzeicheninformationen oder Abfragen der Telefonverzeichnisinformationen oder der Kennzeicheninformationen serverseitig über ein Netzwerk.

5. Verfahren nach Anspruch 4, wobei die Audioausgabeperipherie Bluetooth-Kopfhörer oder -Ohrhörer aufweist und der im Voraus festgelegte Audioweg einen Advanced Audio Distribution Profile-Weg und einen Synchronous Connection Oriented Link-Weg aufweist.

6. Vorrichtung zur Erkennung eingehender Anrufe, die Folgendes aufweist:
ein Bestimmungsmodul (301), das beim Empfangen eines eingehenden Anrufs zum Bestimmen von Sprachidentifikationsinformationen des eingehenden Anrufs gemäß Nummerninformationen des eingehenden Anrufs konfiguriert ist; und
ein Wiedergabemodul (302), das zum Wiedergeben der Sprachidentifikationsinformationen des eingehenden Anrufs für einen Benutzer konfiguriert ist, wobei das Bestimmungsmodul (301) Folgendes aufweist:
ein erstes Abfrageuntermodul (301A), das zum örtlichen Abfragen von Kontaktinformationen gemäß den Nummerninformationen des eingehenden Anrufs konfiguriert ist;
ein erstes Bestimmungsuntermodul (301B), das, wenn Kontaktinformationen bezüglich der Nummerninformationen des eingehenden Anrufs abgefragt werden, zum Bestimmen, dass Sprachaufforderungsinformationen des eingehenden Anrufs Sprachaufforderungsinformationen eines ersten Typs sind, konfiguriert ist, wobei die Sprachaufforderungsinformationen eines ersten Typs abgefragte Kontaktinformationen bezüglich der Nummer des eingehenden Anrufs aufweisen;
ein zweites Abfrageuntermodul (301C), das, wenn keine Kontaktinformationen bezüglich der Nummer des eingehenden Anrufs abgefragt werden, zum Abfragen von Gelbe-Seiten-Informationen gemäß den Nummerninformationen des eingehenden Anrufs konfiguriert ist, wobei die Gelbe-Seiten-Informationen eine Echter-Name-Authentifizierung durchlaufen haben;
ein zweites Bestimmungsuntermodul (301D), das, wenn Gelbe-Seiten-Informationen bezüglich der Nummerninformationen des eingehenden Anrufs abgefragt werden, zum Bestimmen, dass Sprachaufforderungsinformationen des eingehenden Anrufs Sprachaufforderungsinformationen eines zweiten Typs sind, konfiguriert ist, wobei die Sprachaufforderungsinformationen eines zweiten Typs abgefragte Gelbe-Seiten-Informationen bezüglich der Nummerninformationen des eingehenden Anrufs aufweisen;
ein drittes Abfrageuntermodul (301E), das, wenn keine Gelbe-Seiten-Informationen bezüglich der Nummerninformationen des eingehenden Anrufs abgefragt werden, zum Abfragen von Kennzeicheninformationen gemäß den Nummerninformationen des eingehenden Anrufs konfiguriert ist, wobei die Kennzeicheninformationen von anderen Benutzern markiert ist; und
ein drittes Bestimmungsuntermodul (301F), das, wenn Kennzeicheninformationen bezüglich der Nummerninformationen des eingehenden Anrufs abgefragt werden, zum Bestimmen, dass Sprachaufforderungsinformationen des eingehenden Anrufs Sprachaufforderungsinformationen eines dritten Typs sind, konfiguriert ist, wobei die Sprachaufforderungsinformationen eines dritten Typs die Kennzeicheninformationen aufweisen.

7. Vorrichtung nach Anspruch 6, wobei die Sprachidentifikationsinformationen des eingehenden Anrufs Kontaktinformationen, Telefonverzeichnisinformationen oder Kennzeicheninformationen aufweisen, die den Nummerninformationen des eingehenden Anrufs entsprechen.

8. Vorrichtung nach Anspruch 6, wobei das Bestimmungsmodul (301) ferner Folgendes aufweist:
ein viertes Bestimmungsuntermodul (301G), das, wenn keine Kennzeicheninformationen in Bezug auf die Nummerninformationen des eingehenden Anrufs abgefragt werden, zum Bestimmen, dass Sprachaufforderungsinformationen des eingehenden Anrufs Sprachaufforderungsinformationen eines vierten Typs sind, konfiguriert ist, wobei die Sprachaufforderungsinformationen eines vierten Typs die Nummerninformationen des eingehenden Anrufs aufweisen.

9. Vorrichtung nach Anspruch 6, wobei das erste Abfrageuntermodul (301A) Folgendes aufweist:
eine erste Abfrageuntereinheit (301A1), die zum örtlichen Abfragen der Kontaktinformationen konfiguriert ist;
wobei das zweite Abfrageuntermodul (301C) Folgendes aufweist:
eine zweite Abfrageuntereinheit (301C1), die zum örtlichen Abfragen der Gelbe-Seiten-Informationen oder zum Abfragen der Gelbe-Seiten-Informationen serverseitig über ein Netzwerk konfiguriert ist;
wobei das dritte Abfrageuntermodul (301E) Folgendes aufweist:
eine dritte Abfrageuntereinheit (301E1), die zum örtlichen Abfragen der Kennzeicheninformationen oder zum Abfragen der Kennzeicheninformationen serverseitig über ein Netzwerk konfiguriert ist.

10. Computerprogramm, das bei Ausführung an einem Prozessor ein Verfahren nach einem der Ansprüche 1 bis 5 durchführt.

## Revendications

1. Procédé d'identification d'un appel entrant, comprenant les étapes suivantes :
à la réception d'un appel entrant, la détermination (101) par un dispositif d'informations d'identification vocale de l'appel entrant conformément à des informations de numéro de l'appel entrant ; et
la reproduction (102) par le dispositif des informations d'identification vocale de l'appel entrant pour un utilisateur, dans lequel la détermination (101) des informations d'identification vocale de l'appel entrant conformément à des informations de numéro de l'appel entrant comprend :
la consultation d'informations de contact conformément aux informations de numéro de l'appel entrant dans un répertoire d'adresses local ;
quand des informations de contact relatives aux informations de numéro de l'appel entrant sont consultées, la détermination (201) que des informations d'invite vocale de l'appel entrant sont des informations d'invite vocale d'un premier type, dans lequel les informations d'invite vocale d'un premier type comprennent des informations de contact consultées relatives au numéro de l'appel entrant ;
quand aucune information de contact relative au numéro de l'appel entrant n'est consultée, la consultation d'informations de pages jaunes conformément aux informations de numéro de l'appel entrant, dans lequel les informations de pages jaunes ont réussi une authentification de nom réel ;
quand des informations de pages jaunes relatives aux informations de numéro de l'appel entrant sont consultées, la détermination (202) que des informations d'invite vocale de l'appel entrant sont des informations d'invite vocale d'un deuxième type,
dans lequel les informations d'invite vocale d'un deuxième type comprennent des informations de pages jaunes consultées relatives aux informations de numéro de l'appel entrant ;
quand aucune information de pages jaunes relative aux informations de numéro de l'appel entrant n'est consultée, la consultation d'informations d'étiquette d'identification conformément aux informations de numéro de l'appel entrant, dans lequel les informations d'étiquette d'identification sont marquées par d'autres utilisateurs ; et
quand des informations d'étiquette d'identification relatives aux informations de numéro de l'appel entrant sont consultées, la détermination (203) que des informations d'invite vocale de l'appel entrant sont des informations d'invite vocale d'un troisième type, dans lequel les informations d'invite vocale d'un troisième type comprennent des informations d'étiquette d'identification.

2. Procédé selon la revendication 1, dans lequel les informations d'identification vocale de l'appel entrant comprennent des informations de contact, des informations d'annuaire téléphonique ou des informations d'étiquette d'identification correspondant aux informations de numéro de l'appel entrant.

3. Procédé selon la revendication 2, comprenant en outre l'étape suivante :
quand aucune information d'étiquette d'identification relative aux informations de numéro de l'appel entrant n'est consultée, la détermination par le dispositif que des informations d'invite vocale de l'appel entrant sont des informations d'invite vocale d'un quatrième type, dans lequel les informations d'invite vocale d'un quatrième type comprennent les informations de numéro de l'appel entrant.

4. Procédé selon la revendication 1, dans lequel la consultation des informations de pages jaunes ou des informations d'étiquette d'identification conformément aux informations de numéro de l'appel entrant comprend l'étape suivante :
la consultation locale des informations d'annuaire téléphonique ou des informations d'étiquette d'identification ; ou, la consultation des informations d'annuaire téléphonique ou des informations d'étiquette d'identification au niveau d'une extrémité serveur par l'intermédiaire d'un réseau.

5. Procédé selon la revendication 4, dans lequel le périphérique de sortie audio comprend un casque ou des écouteurs Bluetooth, et le trajet audio préétabli comprend un trajet à profil de distribution audio avancé et un trajet à liaison orientée connexion synchrone.

6. Dispositif d'identification d'un appel entrant, comprenant :
un module de détermination (301) configuré pour, quand un appel entrant est reçu, déterminer des informations d'identification vocale de l'appel entrant conformément à des informations de numéro de l'appel entrant ; et
un module de reproduction (302) configuré pour reproduire des informations d'identification vocale de l'appel entrant pour un utilisateur, dans lequel le module de détermination (301) comprend :
un premier sous-module d'interrogation (301A) configuré pour consulter localement des informations de contact conformément aux informations de numéro de l'appel entrant ;
un premier sous-module de détermination (301B) configuré pour, quand des informations de contact relatives aux informations de numéro de l'appel entrant sont consultées, déterminer que des informations d'invite vocale de l'appel entrant sont des informations d'invite vocale d'un premier type, dans lequel les informations d'invite vocale d'un premier type comprennent des informations de contact consultées relatives au numéro de l'appel entrant ;
un deuxième sous-module d'interrogation (301C) configuré pour, quand aucune information de contact relative au numéro de l'appel entrant n'est consultée, consulter des informations de pages jaunes conformément aux informations de numéro de l'appel entrant, dans lequel les informations de pages jaunes ont réussi une authentification de nom réel ;
un deuxième sous-module de détermination (301D) configuré pour, quand des informations de pages jaunes relatives aux informations de numéro de l'appel entrant sont consultées, déterminer que des informations d'invite vocale de l'appel entrant sont des informations d'invite vocale d'un deuxième type, dans lequel les informations d'invite vocale d'un deuxième type comprennent des informations de pages jaunes consultées relatives aux informations de numéro de l'appel entrant ;
un troisième sous-module d'interrogation (301E) configuré pour, quand aucune information de pages jaunes relatives aux informations de numéro de l'appel entrant n'est consultée, consulter des informations d'étiquette d'identification conformément aux informations de numéro de l'appel entrant, dans lequel les informations d'étiquette d'identification sont marquées par d'autres utilisateurs ; et
un troisième sous-module de détermination (301F) configuré pour, quand des informations d'étiquette d'identification relatives aux informations de numéro de l'appel entrant sont consultées, déterminer que des informations d'invite vocale de l'appel entrant sont des informations d'invite vocale d'un troisième type, dans lequel les informations d'invite vocale d'un troisième type comprennent les informations d'étiquette d'identification.

7. Dispositif selon la revendication 6, dans lequel les informations d'identification vocale de l'appel entrant comprennent des informations de contact, des informations d'annuaire téléphonique ou des informations d'étiquette d'identification correspondant aux informations de numéro de l'appel entrant.

8. Dispositif selon la revendication 6, dans lequel le module de détermination (301) comprend en outre :
un quatrième sous-module de détermination (301G) configuré pour, quand aucune information d'étiquette d'identification relative aux informations de numéro de l'appel entrant n'est consultée, déterminer que des informations d'invite vocale de l'appel entrant sont des informations d'invite vocale d'un quatrième type, dans lequel les informations d'invite vocale d'un quatrième type comprennent les informations de numéro de l'appel entrant.

9. Dispositif selon la revendication 6, dans lequel le premier sous-module d'interrogation (301A) comprend :
une première sous-unité d'interrogation (301A1) configurée pour consulter localement les informations de contact ;
dans lequel le deuxième sous-module d'interrogation (301C) comprend :
une seconde sous-unité d'interrogation (301CI) configurée pour consulter localement les informations de pages jaunes, ou consulter les informations de pages jaunes au niveau d'une extrémité de serveur par l'intermédiaire d'un réseau ;
dans lequel le troisième sous-module d'interrogation (301E) comprend :
une troisième sous-unité d'interrogation (301E1) configurée pour consulter localement les informations d'étiquette d'identification, ou consulter les informations d'étiquette d'identification au niveau d'une extrémité de serveur par l'intermédiaire d'un réseau.

10. Programme informatique, lequel, à son exécution sur un processeur, réalise un procédé selon l'une quelconque des revendications 1 à 5.
